Europäisches Patentamt

(19) European Patent Office

Office européen des brevets

(11) EP 0 596 757 B1

(12) **FASCICULE DE BREVET EUROPEEN**

(45) Date de publication et mention
de la délivrance du brevet:
**29.10.1997 Bulletin 1997/44**

(51) Int. Cl.⁶: $A01K\ 87/00$

(21) Numéro de dépôt: **93402107.2**

(22) Date de dépôt: **27.08.1993**

(54) **Procédé pour la réalisation d'éléments tubulaires en fibres liées par de la résine synthétique destinés à être emboîtés les uns dans les autres pour former une canne à pêche dont l'action est contrôlée et éléments obtenus par ce procédé**

Verfahren zum Herstellen von rohrförmigen Elementen aus kunstharzgebundenen Fasern, die ineinanderschiebbar sind, um eine Angelrute mit kontrollierter Bewegung zu bilden, und mit diesem Verfahren hergestellte Elemente

Method of making from fibres held together with a synthetic resin, tubular elements intended to be telescoped one within another to make a fishing rod with controlled action, and elements produced by this method

(84) Etats contractants désignés:
**BE DE ES FR GB IT NL**

(30) Priorité: **08.09.1992 FR 9210701**

(43) Date de publication de la demande:
**11.05.1994 Bulletin 1994/19**

(73) Titulaire:
**VIELLARD SOCIETE ANONYME, V.S.A.
F-37800 Sainte Maure de Touraine (FR)**

(72) Inventeur: **Viellard, Paul-Henri**
**F-75116 Paris (FR)**

(74) Mandataire: **Hud, Robert**
**Cabinet COLLIGNON**
**15 rue de Surène**
**75008 Paris (FR)**

(56) Documents cités:
**FR-A- 2 619 340          US-A- 4 653 216**

Printed by Rank Xerox (UK) Business Services
2.14.19/3.4

## Description

La présente invention concerne un procédé industriel, répétitif, permettant d'optimiser l'utilisation de fibres de synthèse utilisées noyées dans des résines durcies par polymérisation pour fabriquer des éléments tubulaires. Cette optimisation résulte de nombreuses recherches et d'essais. Quoique non exclusivement, elle est particulièrement appropriée à être mise en oeuvre pour la réalisation des éléments tubulaires formant des brins de cannes à pêche destinés à être emboîtés les uns dans les autres.

On sait qu'avec l'apparition sur le marché des fibres de synthèse, en particulier de carbone, des cannes à pêche de plus en plus longues tout en restant remarquablement rigides, fines et légères peuvent être fabriquées. En particulier des cannes destinées à la pêche dite "au coup" généralement constituées de 3 à 10, voir 12 ou plus, éléments emboîtés "télescopiquement" ou "par emmanchement" peuvent atteindre des longueurs de 12 à 15 mètres voir 18 mètres ou plus, tout en conservant une "action", comme disent les pêcheurs, satisfaisante. Cette "action" propre à chaque canne, est l'expression synthétique de nombreux paramètres reflétant l'ensemble de ses qualités qui découlent pour l'essentiel du diamètre du talon de la canne, du poids de celle-ci et de sa répartition de part et d'autre de son centre de gravité et surtout de sa rigidité.

Chaque élément emboîté dans un autre pour constituer la canne participe à cette "action". On sait que la rigidité de l'élément tubulaire varie à la fois avec sa résistance à l'écrasement et à la flexion. Par exemple, les qualités remarquables des fibres de carbone, très légères, qui possèdent un module de rigidité (Jung) très élevé constituent, pour produire de tels éléments, une excellente matière première lorsqu'elles sont noyées dans des résines et polymérisées. C'est ainsi que les cannes à bonne qualité sont couramment fabriquées à partir de ces fibres souvent associées à d'autres par exemple de verre ou d'aramide. Selon que "l'action" souhaitée par le pêcheur reflète une plus ou moins grande rigidité, les fibres seront différemment orientées le long des éléments constitutifs de la canne et en particulier les emboitements résisteront plus ou moins à l'écrasement. On sait que pour réaliser de tels éléments on met en oeuvre principalement un procédé de roulage de nappes ou de tissus préalablement imprégnés de résine thermodurcissables, autour d'un mandrin métallique dont la surface extérieure correspond à la surface intérieure de l'élément à obtenir, puis on renforce les extrémités en y enroulant d'autres renforts en nappe ou en tissus pour conférer, à l'élément obtenu, au niveau des emboîtements, une bonne résistance à la compression. Dans les éléments ainsi obtenus, la résistance aux efforts de flexion est due aux fibres qui se trouvent disposées longitudinalement, tandis que la résistance à l'écrasement est procurée par les fibres transversalement enroulées dans des plans orthogonaux à l'axe dudit élément.

Lorsqu'on enroulera un tissu, la trame donnera la résistance à la compression et la chaîne la résistance à la flexion. Lorsqu'on enroulera une nappe de fibres unidirectionnelles il faudra superposer une couche orientée orthogonalement à l'autre, l'une conférant la résistance à la flexion et l'autre à l'écrasement. Quelque soit le procédé utilisé l'un et l'autre comportent de nombreux inconvénients.

Ils ne permettent pas d'obtenir une qualité constante pour un ensemble de même brins car ils font l'un et l'autre appel à une opération de roulage manuel non dépourvue d'aléas. Il est également difficile de prédécouper exactement la bande de tissu ou de nappe à enrouler pour que les bords latéraux de celle-ci soient à l'aplomb rigoureux l'un de l'autre. En réalité, on fait généralement en sorte que le bord extérieur chevauche légèrement le bord intérieur. Il en résulte que les propriétés mécaniques de l'élément obtenu ne sont pas isotropes autour de l'axe de celui-ci. Le long de la génératrice sur laquelle se chevauchent lesdits bords latéraux de la bande de tissu, l'élément tubulaire présente une plus grande rigidité. Ainsi, l'action de la canne à pêche ne peut pas être identique dans toutes les directions autour de l'axe de celle-ci. Par ailleurs, les couches de tissu superposées, lorsque la résine qui les imprègne est polymérisée, ont tendance à se délaminer sous les efforts de torsion et de flexion répétés.

Mais surtout, le tissu ou la nappe utilisés ne permettent pas de "doser" facilement "l'action" recherchée de la canne car le fabricant est prisonnier de l'orientation des fibres du tissu (trame, chaîne) ou de la nappe unidirectionnelle.

Selon le document US-A-4 653 216, il est connu de réaliser un élément de canne à pêche comprenant un élément tubulaire formé par enroulement, sur un mandrin, d'une nappe ou d'un tissu de fibres imprégnées de résine, et une bande de renforcement faite de spires de fibres de carbone, de verre ou d'aramide qui est enroulée en diagonale à pas constant sur l'élément tubulaire. Lors du durcissement de la résine, la bande de renforcement s'intègre à l'élément tubulaire.

La présente invention a pour objet de définir les situations et les limites d'orientation des fibres le long des éléments constitutifs d'une canne à pêche de telle façon que l'action de la canne soit optimisée en fonction des désirs de l'utilisateur, et que la fabrication de ceux-ci soit répétitive et mécanisée pour assurer une qualité constante. Pour ce faire, on utilise une machine à commandes numériques qui permet de bobiner directement autour du mandrin les fibres préalablement imprégnées de résine selon des angles "a" variables le long du mandrin de diamètre "D", ces angles "a" découlent des pas "p" d'enroulement retenus et sont tels que

$$tg\ a = \frac{\pi D}{P}\ .$$

Selon l'invention, le procédé pour la réalisation, en vue de les emboîter les uns dans les autres, d'éléments des cannes à pêche téléscopiques ou à emmanchement consiste à enrouler des mèches de fibres de renforcement, préalablement imprégnées de résine thermodurcissable, autour d'un mandrin rigide de diamètres d'extrémité D1 et D2 entraîné en rotation, et il se caractérise en ce que l'enroulement des dites mèches de renforcement est réalisé

Les objectifs et avantages précités de l'invention ainsi que d'autres apparaîtront clairement d'après les descriptions suivantes données à titre d'exemples indicatifs mais nullement limitatifs en référence aux dessins annexés dans lesquels :

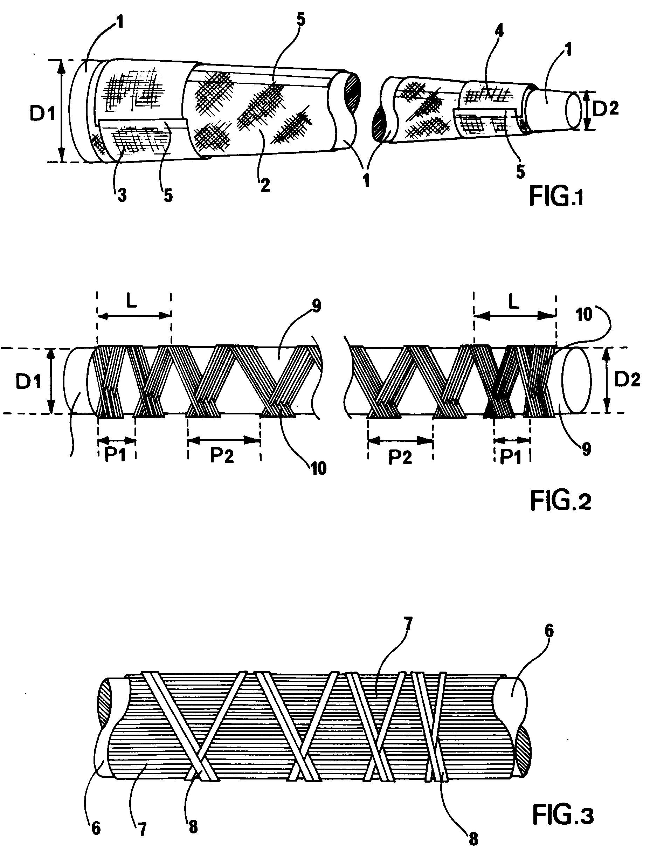

la figure 1 est une vue schématique du procédé connu de préparation d'un élément conique de canne à pêche par superposition autour d'un mandrin (1) de le diamètre D2 étant supérieur ou égal à 8 mm, le rapport des diamètres $\frac{D2}{D1}$ étant compris dans une fourchette telle que $0,67 \leq \frac{D2}{D1} \leq 1$, le pas p1 se situant sur les zones L d'extrémité du mandrin telles que L est compris entre 50 mm et 100 mm.

Les objectifs et avantages précités de l'invention ainsi que d'autres apparaîtront clairement d'après les descriptions suivantes données à titre d'exemples indicatifs mais nullement limitatifs en référence aux dessins annexés dans lesquels :

la figure 1 est une vue schématique du procédé connu de préparation d'un élément conique de canne à pêche par superposition autour d'un mandrin (1) de couches de nappes ou de tissus (2), (3) et (4) imprégnées de résine. Les zones de recouvrement (5) conféreront à l'élément tubulaire obtenu en fin de préparation, après polymérisation et démandrinage, une anisotropie par rapport à l'axe de l'élément, préjudiciable à la qualité de la canne.
La figure 2 est une vue schématique de la réalisation d'un élément de canne à pêche, selon le procédé de l'invention ; et
la figure 3 est une vue schématique de la réalisation d'un élément de canne à pêche, selon une variante du procédé de la figure 2.

En référence à la figure 2 on a enroulé, sur un mandrin 9 légèrement conique dont les diamètres d'extrémité D1 et D2 sont tels que D1 > D2, une mèche 10 de fibres de carbone préalablement imprégnée de résine thermodurcissable. Ces enroulements sont réalisés de façon que les pas d'enroulement p1 aux deux extrémités du mandrin 9 soient plus courts que le pas d'enroulement p2 au milieu du mandrin.
Conformément à l'invention et d'une façon remarquable faisant suite aux recherches effectuées l'Inventeur a découvert que, pour obtenir en fin de préparation un élément de canne conférant à celle-ci une action de qualité conforme aux désirs des utilisateurs, il faut que le pas p1 d'enroulement de la fibre de carbone aux extrémités et le pas p2 d'enroulement de la fibre de carbone dans la partie centrale se situent à l'intérieur des fourchettes suivantes :

$$75 \text{ mm} \leq \frac{p1}{2} \leq 100 \text{ mm}$$

$$100 \text{ mm} \leq \frac{p2}{2} \leq 250 \text{ mm} ,$$

les diamètres d'extrémité D1 et D2 étant choisis pour que $0,67 \leq \frac{D2}{D1} \leq 1$.
D2 étant $\geq 8$ mm et $\frac{p1}{2}$ se situant dans une zone L du mandrin telle que 50 mm $\leq$ L $\leq$ 100 mm.
En se référant maintenant à la figure 3 on a représenté schématiquement une variante du procédé selon la figure 2, suivant laquelle on dépose d'abord autour du mandrin 6 une nappe 7 unidirectionnelle de fibres de carbone préimprégnée de résine thermodurcissable, puis on procède ensuite à l'enroulement des fibres de carbone 8 selon des pas variables. Ces pas d'enroulement sont choisis dans les fourchettes mentionnées en référence à la figure 2.

**Revendications**

1. Procédé pour la réalisation, en vue de les emboîter les uns dans les autres, d'éléments de cannes à pêche télescopiques ou à emmanchement, selon lequel on enroule des mèches de fibres de renforcement préalablement imprégnées de résine thermodurcissable, autour d'un mandrin rigide de diamètres d'extrémité D1 et D2 entraîné en rotation, caractérisé en ce que l'enroulement des dites mèches des fibres de renforcement est réalisé selon des pas p1 situés sur les zones d'extrémité du mandrin et p2 au milieu du mandrin, tels que les pas p1 et p2 soient compris à l'intérieur des fourchettes de valeurs

$$75 \text{ mm} \leq \frac{p1}{2} \leq 100 \text{ mm}$$

$$100 \text{ mm} \leq \frac{p2}{2} \leq 250 \text{ mm}$$

le diamètre D2 étant supérieur ou égal à 8 mm, le rapport des diamètres $\frac{D2}{D1}$ étant compris dans une fourchette telle que $0,67 \leq \frac{D2}{D1} \leq 1$, le pas p1 se situant sur les zones L d'extrémité du mandrin telles que L est compris entre 50 mm et 100 mm.

2. Procédé selon la revendication 1, selon lequel on revêt le mandrin d'une nappe de fibres unidirectionnelles, puis on procède à l'enroulement des mèches de fibres de renforcement.

## Claims

1. Method for embodying elements, in view to fit them into each others, to form telescopic, put in or put over fishing rods, wherein roves of thermoset resin preimpregnated reinforcing fibers are wound around a rigid rotary driven mandrel of extremity diameters D1 and D2 characterized in that the winding of said reinforcing fiber roves is performed with winding pitches p1 situated on the extremity zones of the mandrel and p2 on the middle of the mandrel, such that these p1 and p2 winding pitches are comprised within the following brackets of values

$$75 \text{ mm} \le \frac{p1}{2} \le 100 \text{ mm}$$

$$100 \text{ mm} \le \frac{p2}{2} \le 250 \text{ mm}$$

the D2 diameter being higher or equal to 8 mm, the diameters ratio D2/D1 being comprised in a bracket such that $0,67 \le D2/D1 \le 1$, the P1 winding pitch being situated over the L extremity zones of the mandrel such that L is comprised between 50 mm an 100 mm.

2. Method according to claim 1 wherein a tape of unidirectionnal fibers is laid around the mandrel before performing the windings of the reinforcing fiber roves.

## Patentansprüche

1. Verfahren zur Herstellung von ineinander schiebbaren bzw. ineinander steckbaren Elementen für Teleskopangelruten, bei welchem Stränge von zuvor in einem in Wärme aushärtbarem Harz getränkten Verstärkungsfasern um einen in Drehung versetzten starren Dorn mit einem Durchmesser D1 bzw. D2 an seinen Enden gewickelt werden, dadurch **gekennzeichnet**, daß das Aufwickeln der Stränge von Verstärkungsfasern entlang Wickelgängen p1, die auf den Endabschnitten des Dorns liegen, und p2 in der Dornmitte in der Weise erfolgt, daß die Wickelgänge p1 und p2 innerhalb der Wertebereiche

$$75 \text{ mm} \le \frac{p1}{2} \le 100 \text{ mm}$$

$$100 \text{ mm} \le \frac{p2}{2} \le 250 \text{ mm}$$

liegen, wobei der Durchmesser D2 mindestens gleich 8 mm ist und das Verhältnis zwischen den Durchmessern D2/D1 innerhalb eines Wertebereichs von beispielsweise $0,67 \le D2/D1 \le 1$ liegt, wobei sich der Wickelgang p1 in den Bereichen L am Ende des Dorns befindet, in denen L zwischen 50 und 100mm liegt.

2. Verfahren nach Anspruch 1, bei welchem der Dorn mit einer Schicht von in einer Richtung verlaufenden Fasern umhüllt wird und anschließend die Stränge aus Verstärkungsfasern aufgewickelt werden.

FIG.1

FIG.2

FIG.3